# EUROPEAN PATENT APPLICATION

(11) **EP 2 012 382 A1**
(43) Date of publication of application: **07.01.2009**
(21) Application number: 07720809.8
(22) Date of filing: 16.04.2007
(51) Int. Cl.: H01M 8/00

(54) **A FUEL CELL PILE WITHOUT TERMINAL PLATES SUITABLE FOR LOW TEMPERATURE OPERATION**

(30) Priority: 26.04.2006 CN 200610026051
(71) Applicant: Tian, Binglun, Jiading District, Shanghai 201803 (CN)
(72) Inventor: DONG, Hui, Shanghai 201400 (CN)
(74) Representative: Hryszkiewicz, Danuta
(86) International application number: PCT/CN2007/001236
(87) International publication number: WO 2007/128202

(57) **Abstract**

A fuel cell pile without terminal plates suitable for low temperature operation, comprises membrane electrodes, double pole plates, current collecting boards, electrically insulating partition boards, and fixing rings, wherein an electrically insulating partition board and a current collecting board constitutes a set of current output members. The membrane electrodes, the wedge-shaped double pole plates and the current output members constitute a cylindrical fuel cell pile and the fuel cell pile is fixed integrally by two fixing rings. The fuel cell pile further comprises a upper terminal cover plate and a lower terminal cover plate connected on the upper and lower axis terminals of the cylindrical fuel cell pile. Fluid passages of hydrogen and /or air and /or cooling liquid are disposed inside the upper terminal cover plate and the lower terminal cover plate and an inlet and an outlet of the liquid are provided accordingly. The heavy battery terminal plates in the common cell pile are not existed in the cell pile of the invention, but instead of fixing ring which can be light. Every place of the membrane electrodes inside the cell pile bears uniformly and the deformation problem of the terminal plates is not existed. The water and heat balance of the first and the last electrode of the cell pile is good and is basically consistent with the other electrode inside the cell pile. The cell pile is fit for low temperature cooling operation under zero degree.

## Description

The invention relates to a fuel cell, and more particularly, to a fuel cell stack free of terminal plate for low temperature starting operation.

The research of low temperature cold starting and operation of fuel cell is a front subject internationally, since the cold starting performance of fuel cell influences directly its practical degree and application range.

For conventional fuel cell power generation system, water humidification is needed for the operation of fuel cell, and water is required for cooling the fuel cell stack. Therefore, under a condition of temperature below 0°C, it is very difficult to cold start the fuel cell. If the water management of the fuel cell is failed, the cell system usually can not be started normally under temperature of below 0°C. At a temperature below 0°C, the water in the cell system is easy to freeze, resulting in permanent damage to the whole system in some conditions.

An America patent of 6699612 disclosed a cell system, wherein a cyclic antifreeze glycol is utilized to cool the heat generated by the fuel cell. At the same time, a refrigerant also serves to mix with fuel gas in the heat exchanger to remove the water in the fuel. A dewatering mechanism is also added in the system to remove the water of the refrigerant in time to ensure the concentration of the refrigerant. It is clear that this system is very complicated.

Another America patent of 6727013 disclosed a method for keeping the temperature of a fuel cell, wherein the fuel cell device is mainly utilized to keep the temperature at standby status, and an external heating system is utilized to heat the fuel cell stack. A resistance load is firstly applied to generate heat, and then a fan is utilized to blow the heat wind to the fuel cell stack. It is observed that energy has to be consumed continuously in the system in order to keep the temperature of the fuel cell stack. Moreover, this patent did not provide low temperature starting information of fuel cell.

Another America patent of 6746789 disclosed a solution by utilizing an external connected catalytic reactor, wherein the hydrogen and air are cold combusted directly to generate heat and water at low temperature to supply the air cathode or anode. By utilizing air as oxidant and refrigerant in the fuel cell system, the cell system is simplified and the low temperature starting performance is increased, though the system is also complicated.

Another America patent of 7014935 disclosed a method of solving the problem existed for the two end cells of the fuel cell stack. During operation, especially during low temperature starting operation, the water and heat of the two end cells of the fuel cell stack is usually distributed non-uniformly. The end cells are processed to improve the anti-corrosion performance of the cell so as to improve the low temperature operability of the cell stack. However, the patent only disclosed method to improve the anti-corrosion performance of the end cells, and the non-uniform water and heat distribution of the two cells of the fuel cell stack is not solved basically.

Another America patent of 6764786 disclosed a special lead board and terminal plate for fuel cell stack. The terminal plate of fuel cell stack is normally made of thick metal plate and thus is heavy and expensive, and has high heat capacity and is easy to loss heat. When operating or starting at low temperature, the cells around the terminal plate is easy to lose heat, influencing the low temperature starting speed of fuel cell, and it is easy to cause back pressure, resulting in permanent damage. The patent disclosed a high strength, low heat capacity, and low heat loss terminal plate, partially solved the problems of fuel cell stack caused during low temperature starting and operation.

Another America patent of 6824901 disclosed a method by adding a porous heat insulation board between the end cell and terminal plate of the fuel cell stack to solve the problems caused by low temperature cold starting. The heat insulation board is made of porous graphite board with a porosity of 50-75%.

However, the heat insulation effect is limited by adopting porous graphite board, and the heat transfer from the end cell to the terminal plate is only partially blocked, so that problem of the low temperature quick starting of the fuel cell system is only partially solved.

Another America patent of 5595834 disclosed a cylindrical cell stack, wherein the polar plate of each cell is circular, and the insulation plate of each cell is extended a certain distance to dissipate heat. However, the cell system of the invention has a big size, and there is water and heat unbalance between the end cells and internal cells, especially at relative low temperature.

Another America patent of 5470671 disclosed a cylindrical fuel cell stack, wherein all the cathode sides of the cells are located on the circumference of the cell device to dissipate heat to the atmosphere. With this invention, since the conventional cell stack structure can not be applied, the size of the cell system is big, the cell voltage is low, and the cell power is small.

Another America patent of 5595834 disclosed a compact cylindrical fuel cell stacked by cell polar plates and cells together. Owing to the problem of heat dissipation, the cell system is difficult to be operated at high environmental temperature. Owing to the existence of end cells, the problem of water and heat unbalance when starting at low temperature is also existed, influencing the low temperature starting performance of the cell system.

Throughout the above patent technology, it can be seen that solutions to improve the low temperature starting performance of fuel cell mainly include: changing antifreeze medium; adding external heating process; processing specially the end cells of cell stack or improving the water and heat management of the whole cell stack. Especially, the water and heat balance of the end cells having a big influence on the low temperature quick cold starting of the fuel cell.

For the low temperature cold starting of fuel cell, the most simple and ideal method is to add fuel hydrogen and air directly into the fuel cell system and to operate the cell at relative low voltage. The fuel cell stack can be heated quickly by the heat generated by the cell itself and thereby can realize low temperature cold starting without any assistance of external auxiliary heating device. In fact, decreasing water humidification of the fuel cell system is a good solution to realize low temperature starting. As disclosed by America patent of 6746789, decreasing humidification and adopting air to cool the fuel cell can simplify the complexity of the fuel cell system.

However, by utilizing air to cool the fuel cell, the power density of the cell stack is low, and the power range is small. Generally, the power range can only up to several hundreds watt, kilowatt fuel cell is not easy to make. The integration of large air-cooling fuel cell stack is complex, and the system power is normally in a range of 100 to 150W/L. It is even difficult to integrate large air-cooling fuel cell stack with a power in a range of kilowatt to tens of kilowatt. Therefore, large fuel cell mainly adopts water or refrigerant as cooling medium. Moreover, normal air-cooling fuel cell also has the water and heat balance problem at the end cells.

Therefore, it is one objective of the present invention to provide a fuel cell stack free of terminal plate for low temperature starting operation to solve the above problems.

To realize the above objective, provided a fuel cell stack free of terminal plate for low temperature starting operation, comprising: a plurality of membrane electrodes, a plurality of bipolar plates, at least one pair of current collecting lead boards, at least one electrical insulating partition boards, and two fastening rings. The bipolar plate is a wedge-shaped bipolar plate with an air flow field, a hydrogen flow field, and a cooling fluid flow field set thereon. One set of current output mechanism can be formed by locating one electrical insulating partition board between one pair of current collecting lead board. The plurality of membrane electrodes, the plurality of wedge-shaped bipolar plates, and the at least one set of current output mechanism form a cylindrical fuel cell stack tightened by the two tightening rings. A top cover plate and a bottom cover plate are connected with the upper and lower shaft ends of the cylindrical fuel cell stack respectively. The electrical insulating partition plate has a planar structure or a wedge-shaped structure with a thickness of 0.01-3mm. The top cover plate and the bottom cover plate are set with hydrogen and/or air and/or cooling fluid flow chambers and corresponding fluid outlets and inlets.

In a class of this embodiment or in another embodiment of the invention, the wedge-shaped bipolar plate can be a one-piece wedge-shaped bipolar plate, or is formed by integrating two pieces wedge-shaped single polar plates, or one piece wedge-shaped single polar plate with one piece planar single polar plate, or two pieces of planar single polar plates and one piece wedge-shaped plate.

In a class of this embodiment or in another embodiment of the invention, the wedge-shaped bipolar plate is made of one or two types of metal plate, graphite plate, and flexible graphite plate.

In a class of this embodiment or in another embodiment of the invention, the fuel cell stack comprises one set of current output mechanism located between the first piece single cell and the last piece single cell of the cylindrical fuel cell stack.

In a class of this embodiment or in another embodiment of the invention, the fuel cell stack comprises at least two or more sets of current output mechanism located at different positions of the cylindrical fuel cell stack to distribute uniformly the multiple single cells of the fuel cell stack into at least two or more cell sets correspondingly.

In a class of this embodiment or in another embodiment of the invention, the internal orifice of the tightening ring comprises a straight orifice and a bellmouth orifice. The two tightening rings serves to house tightly the two ends of the cylindrical fuel cell stack respectively, and are pulled tightly through multiple sets of tightening nuts and screws. The gradual retracted circular face of the bellmouth orifice of the tightening ring is utilized to house the end portion of the cylindrical cell stack into the straight orifice to tighten the multiple membrane electrodes and multiple bipolar plates of the cell stack.

In a class of this embodiment or in another embodiment of the invention, the internal orifice of the tightening ring is a straight orifice. The two tightening rings serve to house directly the two ends of the tightened cylindrical fuel cell stack respectively.

In a class of this embodiment or in another embodiment of the invention, the thickness of the wedge-shaped bipolar plate adjacent to the current collecting lead board can less than those of other wedge-shaped bipolar plates.

In a class of this embodiment or in another embodiment of the invention, the outer surface of the cylindrical fuel cell stack is covered with a ring of air filter. The outer side of the circular top cover plate is installed with a fan.

As a result, the fuel cell stack free of terminal plate for low temperature starting operation of the invention provides the advantages and characteristics of:

1) the fuel cell stack utilizes compact tightening rings to replace the heavy cell terminal plate of conventional cell stack, and thus is light and handy;

2) the wedge-shaped bipolar plate of the cell stack is different from the planar shaped bipolar plate of conventional fuel cell. One piece electrical insulating partition board is located between one pair of current collecting lead boards to form one set of current output mechanism. The two current collecting lead boards are located closely and are only separated by an electrical insulating partition board. At least one set of current output mechanism is generally set in the cell stack. The current increasing and voltage decreasing of the cell stack are easy to realize, and the system is characterized by high integration density;

3) the various portions of the membrane electrodes of the cell stack are stressed uniformly and thus are free of deformation. Owing to the strength of terminal plate, a certain degree of terminal plate deformation is existed on the conventional fuel cell stack, so that the membrane electrodes of conventional cell stack are non-uniformly stressed in the planar direction;

4) the water and heat balance of the end electrodes of the cell stack is perfect and is consistent with other internal electrodes, so that the cell stack is suitable for cold starting and operation under a temperature of below 0°C;

5) the launder of the air-cooling cell stack is generally in a structure of wedge, so that the air resistance of the air-cooling launder can be reduced, the air cooling heat transfer area can be increased, the heat exchange and the uniformity of thermal distribution in the cell stack can be improved;

6) the power range of the cell stack can be extended rapidly, the power is in a relationship of third power to the size. For example, if the power for a cell with a diameter of 8cm and a height of 8cm is 120W, the power for a cell with a diameter of 16cm and a height of 16cm can reach to 1 kW, and the power for a cell with a diameter of 32cm and a height of 32cm can reach to 8kW. The structure of the cell stack and its system is compact, and a high power density can be kept within a wide power range. The power of a conventional cell stack can normally increase in one-dimensional direction, but the integration degree when increasing in two- or three-dimensional directions will be decreased;

7) the wedge-shaped bipolar plates are compressed tightly together with the membrane electrodes, in combination with the special wedge-shaped structure, so that the cell stack has a strong capability against influence of external forces such as vibration or strike;

8) the launder of the wedge-shaped bipolar plate is normally a through launder having a very low manufacturing cost, and thus is suitable for mass production;

9) the membrane electrode is in a structure of normal rectangle, thus the material efficiency is high; and

10) the air filter can be set directly outside of the cylindrical cell stack, offering a high degree of system integration.

FIG. **1** is a three-dimensional view of a fuel cell stack free of terminal plate for low temperature operation in accordance with one embodiment of the invention;

FIG. **2** is a three-dimensional view of a wedge-shaped bipolar plate in accordance with one embodiment of the invention;

FIG. **3** is a three-dimensional view of a set of current output mechanism in accordance with the invention;

FIG. **4** is an exploded view of a wedge-shaped bipolar plate in accordance with another embodiment of the invention;

FIG. **5** is a three-dimensional view of a fuel cell stack free of terminal plate for low temperature operation in accordance with another embodiment of the invention; and

FIG. **6** is a basic structural view of a fuel cell stack and its auxiliary system in accordance with the invention.

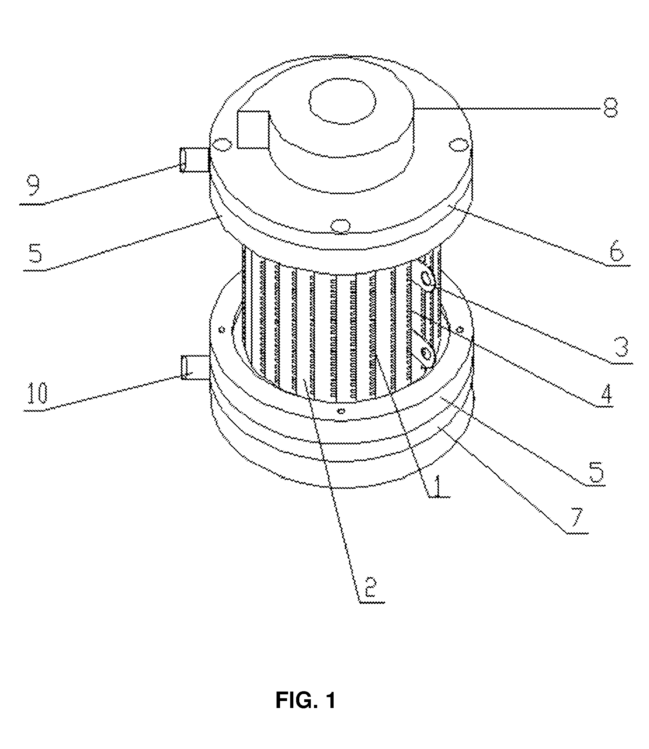

As shown in FIG. **1**, a fuel cell stack free of terminal plate for low temperature starting operation comprises a plurality of membrane electrodes **1**, a plurality of wedge-shaped bipolar plates **2**, at least one pair of current collecting lead boards **3,** at least one electrical insulating partition boards **4**, two tightening rings **5**, a top cover plate **6**, a bottom cover plate **7**, and a centrifugal fan **8**. The electrical insulating partition board **4** is located between one pair of current collecting lead boards **3** to form one set of current output mechanism. The plurality of membrane electrodes **1,** the plurality of wedge-shaped bipolar plates **2**, and the at least one set of current output mechanism are integrated together by two tightening rings **5** to form a cylindrical fuel cell stack. The top cover plate **6** and the bottom cover plate **7** are connected with the upper and lower shaft ends of the cylindrical fuel cell stack respectively. The electrical insulating partition board **4** has a planar structure or a wedge-shaped structure with a thickness of 0.05mm (normally in a range of 0.01 mm∼3mm). A hydrogen flow chamber is set on both the top cover plate **6** and the bottom cover plate **7**, and a hydrogen inlet **9** is set at the side of the top cover plate **6** and a hydrogen outlet **10** is set at the side of the bottom cover plate **7**. This embodiment comprises one set of current output mechanism located between the first piece single cell and the last piece single cell of the cylindrical fuel cell stack.

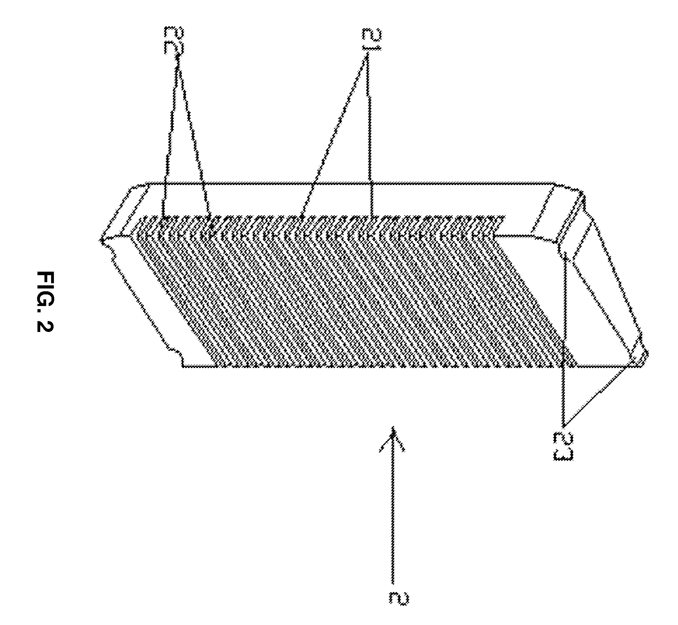

The wedge-shaped bipolar plate of the invention is made of one or two types of metal plate, graphite plate, and flexible graphite plate. The wedge-shaped bipolar plate can be a one-piece wedge-shaped bipolar plate, or is formed by integrating two pieces wedge-shaped single polar plates, or one piece wedge-shaped single polar plate with one piece planar single polar plate, or two pieces planar single polar plates and one piece wedge-shaped plate. The thickness of the wedge-shaped bipolar plate adjacent to the current collecting lead board can less than those of other wedge-shaped bipolar plates. As shown in FIG. **2****,** the two sides of the wedge-shaped bipolar plate **2** are set with an air flow field and a hydrogen flow field respectively. The air flow field comprises a plurality of radial through air flow launders along the surface of the wedge-shaped bipolar plate, the depth of multiple air flow launders can be set from shallow to deep according to the thickness of the wedge-shaped bipolar plate from thin to thick, or can be set uniformly. The hydrogen flow field comprises a plurality of axial through hydrogen flow launders along the surface of the wedge-shaped bipolar plate. As shown in FIG. **2****,** the air flow launder, the launder shoulder, and the seal slot are numbered as **21, 22**, and **23,** respectively, while the hydrogen flow launder is not visible.

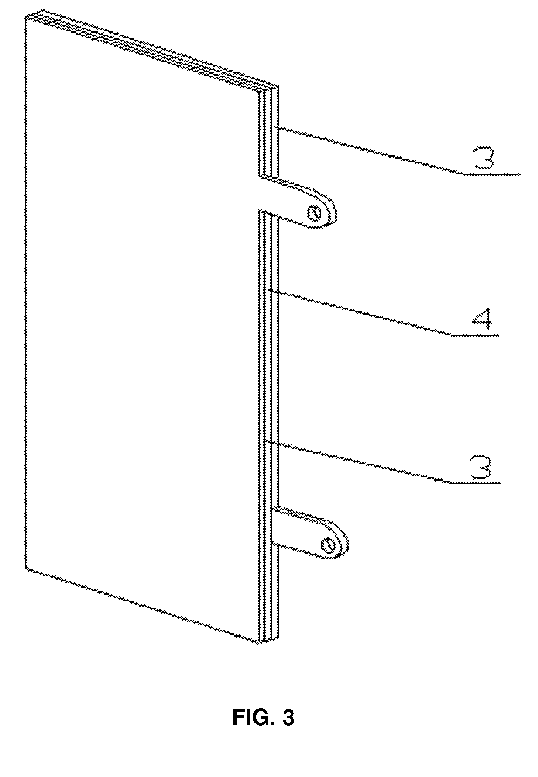

With reference to FIG. **3****,** the current output mechanism is formed by an electrical insulating partition board **4** located between one pair of the current output lead boards **3.** The fuel cell stack comprises at least one set of such current output mechanism. If the fuel cell stack comprises one set of current output mechanism, the current output mechanism is set between the first piece single cell and the last piece single cell of the cylindrical fuel cell stack. If the fuel cell stack comprises at least two sets of current output mechanism, the two or more different sets of current output mechanism can be set at different positions on the cylindrical fuel cell stack respectively to distribute uniformly the multiple single cells of the fuel cell stack into corresponding two or more cell sets.

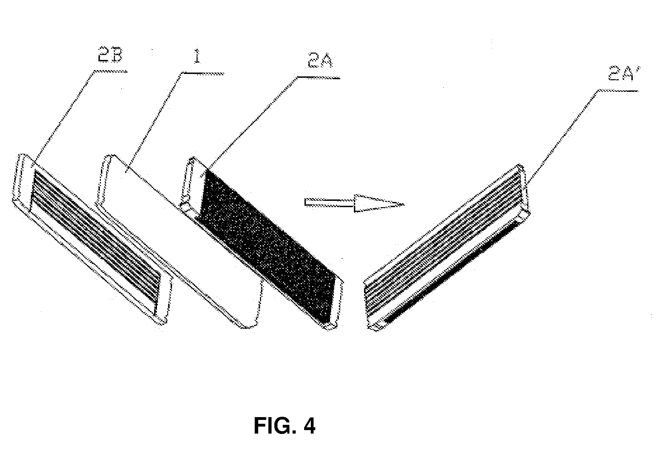

With reference to FIG. **4****,** the wedge-shaped bipolar plate **2** comprises two pieces wedge-shaped single polar plate 2A and 2B. One side of the wedge-shaped single polar plate 2A is set with an reacting air flow field facing to the membrane electrodes, the other side is set with a cooling air flow field. One side of the wedge-shaped single polar plate 2B is set with a hydrogen flow field facing to the membrane electrode. The wedge-shaped single polar plate 2A in FIG**. 2** is rotated a certain degree in order to display the reacting air flow field. When assembling, the side with cooling air flow field of the wedge-shaped single polar plate 2A is affixed to the side without flow field of the wedge-shaped single polar plate 2B.

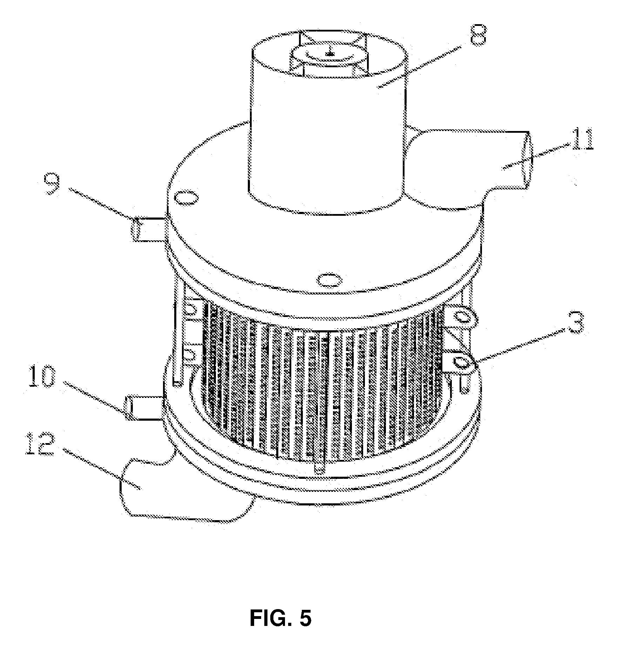

FIG. **5** is a three-dimensional view of a fuel cell stack free of terminal plate for low temperature starting operation in accordance with another embodiment of the invention. The bipolar plate illustrated in FIG. **4** is utilized in this embodiment. 200pcs bipolar plates **2,** the same amount of MEA, and two sets of current output mechanism (each set of current output mechanism comprises two current collecting lead boards **3** and one electrical insulating partition board) together serve to form a 10KW hollow cylindrical fuel cell stack with an outer dimension of 340x340mm and an inner dimension of 220×340mm. The length of the bipolar plate is 340mm, and the effective area of MEA is 180cm². The cooling air flow launder is separated to the reacting air flow launder. The top cover plate **6** of the cell stack is set with a reacting air inlet **11** and is installed with a fan **8** for heat dissipation. The bottom cover plate 7 of the cell stack is set with a reacting air outlet **12.** The cylindrical fuel cell stack comprises two sets of current output mechanism serving to distribute the fuel cell into two cell sets, contributing to decrease the output voltage and increase the output current of the cell stack.

The structure of the tightening ring **5** of the invention can have two different types. For the first type, the internal orifice of the tightening ring comprises a straight orifice and a bellmouth orifice. When housing the tightening rings to the cylindrical fuel cell stack, the two tightening rings serve to house tightly the two ends of the cylindrical fuel cell stack respectively, and are pulled tightly through multiple sets of tightening nuts and screws. The gradual retracted circular face of the bellmouth orifice of the tightening rings is utilized to house the end portion of the cylindrical cell stack into the straight orifice part of the tightening rings to tighten the multiple membrane electrodes and multiple bipolar plates of the cell stack. For the second type, the internal orifice of the tightening ring is a straight orifice. When housing the tightening rings to the cylindrical fuel cell stack, the two tightening rings serve to house directly the two ends of the tightened cylindrical fuel cell stack respectively.

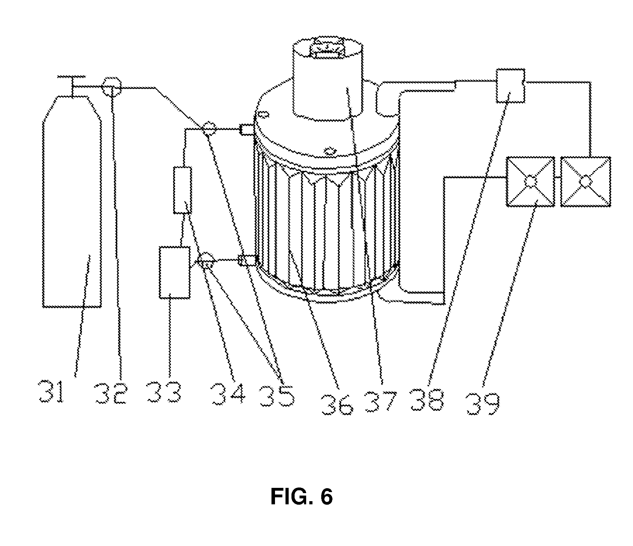

FIG. **6** is a basic structural view of a fuel cell stack and its auxiliary system in accordance with the invention. The length of the bipolar plate of the fuel cell stack in this embodiment is 400mm, the effective area of MEA is 240cm². 240pcs bipolar plates, the same amount of MEA, and one set of current output mechanism together serve to form a 25KW cylindrical fuel cell stack. The auxiliary system comprises a hydrogen storage tank **31**, a pressure reduction valve **32**, a steam-water separator **33**, a hydrogen cycling pump **34**, an electromagnetic valve **35**, an air filter **36**, an air fan **37**, a liquid cycling pump 38, a heat dissipating fin and heat dissipating fan **39**. The air filter 36 is located around the cell stack and serves to ring the cell stack.

The power generation system comprised of the fuel cell stack free of terminal plate of the invention is tested for low temperature starting operation. The bipolar plate comprises two single polar plates, one of the single polar plates is made of planar flexible graphite plate, and the other is made of wedge-shaped graphite plate. The air flow launders capable of realizing both reacting and heat dissipating functions are set on the wedge-shaped graphite plates. 80pcs bipolar plates, the same amount of MEA with an effective area of 52cm², and one set of current output mechanism together serve to form a 1.2KW hollow cylindrical fuel cell stack with an outer dimension of 180x160mm and an inner dimension of 1 00×160mm. The test process for low temperature cold operation is as below: opening the hydrogen input and output electromagnetic valves through a control circuit board at a cold starting temperature of -18°C; closing the hydrogen outlet electromagnetic valve after the cell stack is filled with hydrogen; driving the fan by the enough electrical energy generated by the cell stack to operate to supply the minimum air amount required for reaction; inputting large load to the fuel cell to keep the voltage of the single cell at 0.2V and to provide instant short-circuit operation; a plenty of heat is generated by the cell stack to increase the temperature of the cell stack rapidly to above 0°C within 30s. The low temperature cold starting of the cell stack was performed for more than 100 times, the cells can be operated normally, no cell performance decrease is observed.

This invention is not to be limited to the specific embodiments disclosed herein and modifications for various applications and other embodiments are intended to be included within the scope of the appended claims. While this invention has been described in connection with particular examples thereof, the true scope of the invention should not be so limited since other modifications will become apparent to the skilled practitioner upon a study of the drawings, specification, and following claims.

## Claims

1. A fuel cell stack free of terminal plate for low temperature starting operation, comprising: a plurality of membrane electrodes, a plurality of bipolar plates, at least one pair of current collecting lead boards, at least one electrical insulating partition boards, and two fastening rings, **characterized in that**
said bipolar plate is a wedge-shaped bipolar plate with an air flow field, a hydrogen flow field, and a cooling fluid flow field set thereon;
said at least one set of current output mechanism can be formed by locating one electrical insulating partition board between said at least one pair of current collecting lead boards;
said plurality of membrane electrodes, said plurality of wedge-shaped bipolar plates, and said at least one set of current output mechanism form a cylindrical fuel cell stack tightened by said two tightening rings;
a top cover plate and a bottom cover plate are connected with the upper and lower shaft ends of said cylindrical fuel cell stack respectively;
said electrical insulating partition plate has a planar structure or a wedge-shaped structure with a thickness of 0.01-3mm;
said top cover plate and said bottom cover plate are set with hydrogen and/or air and/or cooling fluid flow chambers and corresponding fluid outlets and inlets.

2. The fuel cell stack of claim 1, **characterized in that** said wedge-shaped bipolar plate can be a one-piece wedge-shaped bipolar plate, or is formed by integrating two pieces wedge-shaped single polar plates, or one piece wedge-shaped single polar plate with one piece planar single polar plate, or two pieces of planar single polar plates and one piece wedge-shaped plate.

3. The fuel cell stack of claim 1, **characterized in that** said wedge-shaped bipolar plate is made of one or two types of metal plate, graphite plate, and flexible graphite plate.

4. The fuel cell stack of claim 1, **characterized in that** the system comprises one set of current output mechanism located between the first piece single cell and the last piece single cell of said cylindrical fuel cell stack.

5. The fuel cell stack of claim 1, **characterized in that** the system comprises at least two or more sets of said current output mechanism located at different positions of said cylindrical fuel cell stack to distribute uniformly the multiple single cells of the fuel cell stack into at least two or more cell sets correspondingly.

6. The fuel cell stack of claim 1, **characterized in that** the internal orifice of said tightening ring comprises a straight orifice and a bellmouth orifice;
said two tightening rings serves to house tightly the two ends of the cylindrical fuel cell stack respectively, and are pulled tightly through multiple sets of tightening nuts and screws;
the gradual retracted circular face of the bellmouth orifice of said tightening ring is utilized to house the end portion of said cylindrical cell stack into the straight orifice to tighten said multiple membrane electrodes and said multiple bipolar plates of said cell stack.

7. The fuel cell stack of claim 1, **characterized in that** the internal orifice of said tightening ring is a straight orifice, and said two tightening rings serve to house directly the two ends of the tightened cylindrical fuel cell stack respectively.

8. The fuel cell stack of claim 1, **characterized in that** the thickness of said wedge-shaped bipolar plate adjacent to said current collecting lead board is less than those of other wedge-shaped bipolar plates.

9. The fuel cell stack of claim 1, **characterized in that** the outer surface of said cylindrical fuel cell stack is covered with a ring of air filter; the outer side of said top cover plate is installed with a fan.
